# EUROPÄISCHE PATENTSCHRIFT

(11) **EP 2 608 893 B1**
(45) Veröffentlichungstag und Bekanntmachung des Hinweises auf die Patenterteilung: **18.10.2017**
(21) Anmeldenummer: 11758121.5
(22) Anmeldetag: 23.08.2011
(51) Int. Cl.: B05B 11/00

(54) **DOSIERSPENDER**
DISPENSER
DISTRIBUTEUR DOSEUR

(30) Priorität: 23.08.2010 DE 202010011715 U
(43) Veröffentlichungstag der Anmeldung: 03.07.2013
(73) Patentinhaber: Brugger, Anton, 87616 Marktoberdorf (DE)
(72) Erfinder: Holzmann, Werner, 87616 Marktoberdorf (DE); Brugger, Anton, 87616 Marktoberdorf (DE)
(74) Vertreter: Bockhorni & Kollegen
(86) Internationale Anmeldenummer: PCT/EP2011/004226
(87) Internationale Veröffentlichungsnummer: WO 2012/031687

(56) Entgegenhaltungen:
- EP-A1- 0 461 010
- EP-A1- 1 104 336
- WO-A1-02/20170

## Beschreibung

Die Erfindung betrifft einen Dosierspender für die Abgabe einer aus mehreren Komponenten bestehenden Substanz mit den oberbegrifflichen Merkmalen des Anspruchs 1.

Aus der EP 1 104 336 ist ein Dosierspender bekannt, bei dem das Mischungsverhältnis zweier pastöser oder flüssiger Komponenten stufenlos einstellbar ist. Der Dosierspender stellt für den Verbraucher, der das Mischungsverhältnis der Komponenten selbst wählen und auf seine persönlichen Bedürfnisse bzw. den Verwendungszweck der gemischten Komponenten abstimmen kann, eine erhebliche Erleichterung dar. Im Dosierspender sind dort zwei Kartuschen mit zugeordneten Pumpen vorgesehen, die über ein verschwenkbares Übertragungselement, dessen Schwenkachse relativ zu den Pumpen bewegbar ist, betätigt werden.

Nachteilig an dem bekannten Dosierspender ist, dass das scheibenförmige Übertragungselement gleichzeitig zur Einstellung des Mischungsverhältnisses der Komponenten dient, wobei in den meisten Positionen eine Schräglage eingenommen wird. Hierdurch können die Pumpeinheiten "schräg" beaufschlagt werden, so dass diese relativ schwergängig sind oder die Betätigungskraft relativ hoch ist. Bei einem Ausfall des Übertragungselementes kann somit keine Entnahme mehr aus dem Dosierspender erfolgen. Zudem ist aufgrund der Doppelfunktion des Übertragungselementes dessen Aufbau und Montage relativ kompliziert.

Es ist die Aufgabe der vorliegenden Erfindung, die Nachteile des Standes der Technik zu überwinden und einen Dosierspender zur Verfügung zu stellen, der einen konstruktiv einfachen und montagefreundlichen Aufbau aufweist.

Diese Aufgabe wird durch einen Dosierspender mit den Merkmalen des Anspruchs 1 gelöst. Vorteilhafte Weiterbildungen der Erfindung sind Gegenstand der abhängigen Ansprüche.

Erfindungsgemäß wird ein Dosierspender für die Abgabe einer aus mehreren Komponenten bestehenden Substanz zur Verfügung gestellt, wobei wenigstens zwei Behälter für die Aufnahme der Komponenten der Substanz vorgesehen sind. Die Behälter können dabei nach Art von Kartuschen, d.h. mit starrem Mantel, aber auch als sog. Flaschen ausgebildet sein. Bevorzugt sind die jeweiligen Behälter in Höhenrichtung des Dosierspenders axial beweglich oder verschiebbar, so dass diese leicht austauschbar sind. Bevorzugt weisen diese einen halbkreisförmigen Querschnitt auf. Die Gestaltung der Behälter richtet sich aber auch nach der Viskosität der Komponenten und deren Entnahmeverhalten. Weiterhin ist an jedem der in einer Außenhülse aufgenommenen Behälter eine Pumpeinheit angeordnet, über die eine Entnahme der jeweiligen Komponenten erfolgt. Die Pumpeinheiten können dabei als Kolbenpumpe, als Balgpumpe oder in einer sonstigen geeigneten Bauweise ausgeführt werden. Der erfindungsgemäße Dosierspender umfasst weiterhin eine Einstelleinrichtung, mit der das Mengenverhältnis der Komponenten der zu dosierenden Substanz einstellbar ist, sowie eine bewegliche Betätigungseinrichtung für die Pumpeinheit und ein Spenderelement, insbesondere in Düsenform für die abzugebene Substanz.

Der Dosierspender ist dadurch ausgebildet, dass ein "gesondertes" Kraftübertragungselement vorgesehen ist, das relativ zur Außenhülse verschiebbar ist und somit bei Beaufschlagung der Betätigungseinrichtung in Axialrichtung des Dosierspenders (entspricht der Hauptausdehnung der Kartuschen oder der Pumpen) beweglich ist. Die Einstelleinrichtung ist somit von der Betätigungseinrichtung entkoppelt, so dass diese Bauteile leicht montiert werden können. Zudem ist sichergestellt, dass die Pumpen exakt in der Axialrichtung beaufschlagt werden, wobei auch Standardpumpen zum Einsatz kommen können. Die Behälter selbst sind in der Axialrichtung bevorzugt ebenfalls beweglich gelagert, so dass diese gegenüber der Einstelleinrichtung entsprechend dem gewünschten Mischungsverhältnis zunächst "ausweichen" können. Der jeweilige Abstand zu den Behältern ist damit veränderbar ist, insbesondere in Form einer um die Hochachse drehbare Einstellscheibe mit dornartigen Vorsprüngen. Die drehbare Einstellscheibe ist dabei mit der Außenhülse gekoppelt, die zugleich den Großteil des Außenumfangs des Dosierspenders bildet, so dass dieser leicht durch Drehen einstellbar ist und ebenso mit geringen Kräften betätigt werden kann. Hierdurch wird auch der Bauaufwand erheblich reduziert und die Montage erleichtert, insbesondere wenn diese Bauteile einstückig geformt sind, insbesondere durch Kunststoff-Spritzgießen. Die Dosiereinstellung kann jedoch herstellerseitig auch fixiert sein, z. B. 50:50 oder 33:67, wobei dann der zweite Behälter in zweckmäßiger Weise mit seinem Volumen doppelt so groß ist wie die erste Kartusche.

Eine Einstellung des Mischungsverhältnisses der Komponenten erfolgt durch Änderung der relativen Drehposition der Keilscheibe, des Keilringes oder der Vorsprünge und der damit verbundenen Änderung des Abstands der Keilscheibe bzw. des Keilringes oder der Vorsprünge an den Behältern oder Behälterböden. Bedingt durch die Ausbildung der Keilscheibe bzw. des Keilringes wird der Hub der Pumpeinheiten und damit die Menge der über die jeweiligen Pumpeinheit geförderten Komponente verändert. Die Komponenten können an der Spenderdüse auch vermischt werden, insbesondere in einem Applikator nach der WO 2006/11273 oder ggf. auch unvermischt ausgetragen werden. Der vorgeschlagene Dosierspender besitzt somit einen einfachen, stabilen Aufbau und eine kompakte Bauweise. Bevorzugt ist die Betätigung am oberen Bereich des Dosierspenders vorgesehen, insbesondere in Form eines Druckknopfes. Das Kraftübertagungselement führt dabei im Innern des Dosierspenders nach unten zu der Einstelleinrichtung, um diese gezielt nach unten ausweichen zu lassen. Dabei kann das Kraftübertragungselement, das nach Maßgabe der Erfindung zwischen den Behältern relativ zu diesen verschiebbar angeordnet ist und ferner im Allgemeinen auf Druck beansprucht sein kann, aber auch als Zugstab ausgelegt sein kann, auch in Form einer Zwischenwand zwischen den Behältern angeordnet sein, um diesen eine zusätzliche Führung zu geben.

Als günstig wird angesehen, wenn die Einstelleinrichtung mittels der Außenhülse stufenlos verdrehbar ausgebildet ist oder aber eine Vielzahl von Rastpositionen zur definierten Verdrehung der Einstelleinrichtung aufweist. Bei der Ausgestaltung mit stufenloser Verdrehung der Einstelleinrichtung kann eine freie Wahl des Mischungsverhältnisses erfolgen. Bei der genannten Definition von Rastpositionen werden einstellbare Mischungsverhältnisse vorgegeben, wobei sich die Anzahl an Rastpositionen an der letztendlich angestrebten Auflösung des Mischungsverhältnisses orientiert. In vorteilhafter Weise ist die Betätigungseinrichtung als breitflächiger Druckknopf gestaltet, der im oberen Bereich der Hülse über einen längeren Axialhub geführt ist. Dadurch ergibt sich eine stabile axiale Führung innerhalb der Hülse, so dass auch ungleiche Betätigungsrichtungen auf die Betätigungskraft der Pumpeinheiten keinen Einfluss besitzen. Der Dosierspender lässt sich damit besonders kompakt und mit geringer Axiallänge aufbauen. Es besteht auch die Möglichkeit, dass eine der Spenderdüse vorgelagerte Mischkammer im Druckknopf vorgesehen ist.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen Zeichnungen der Fig. 4 bis 9. Es zeigen:
- Fig. 1: eine Schnittdarstellung eines Dosierspenders mit Einstelleinrichtung, einer Betätigungseinrichtung und zwei Behältern mit Pumpeinheiten, wobei diese Ausführungsform nicht die erfindungsgemäße Ausgestaltung betrifft,
- Fig. 2: einen der Fig. 1 entsprechenden Schnitt durch den Dosierspender, jedoch in Betätigungsstellung,
- Fig. 3: einen Horizontalschnitt durch den unteren Bereich des Dosierspenders,
- Fig. 4: eine weitere Ausführung eines Dosierspenders mit Zwischenwand als bevorzugtes Kraftübertragungselement,
- Fig. 5: ein um 90° versetzter Schnitt durch den Dosierspender der Fig. 4,
- Fig. 6: einen Schnitt entsprechend der Schnittlinie VI in Fig. 5,
- Fig. 7: eine Schnittansicht entsprechend der Schnittlinie VII in Fig. 5,
- Fig. 8: die Zwischenwand in mehreren Ansichten, und
- Fig. 9: eine bevorzugte Einstellscheibe in mehreren Ansichten.

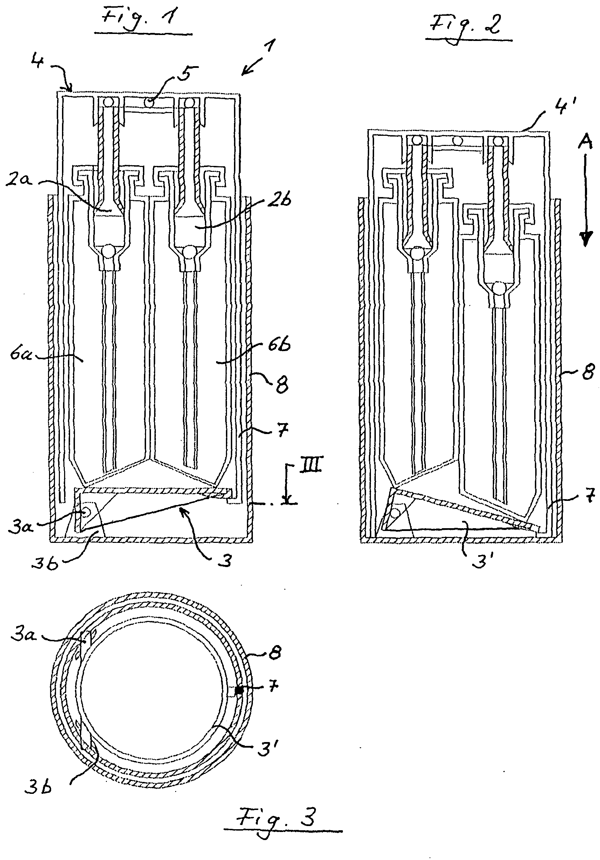

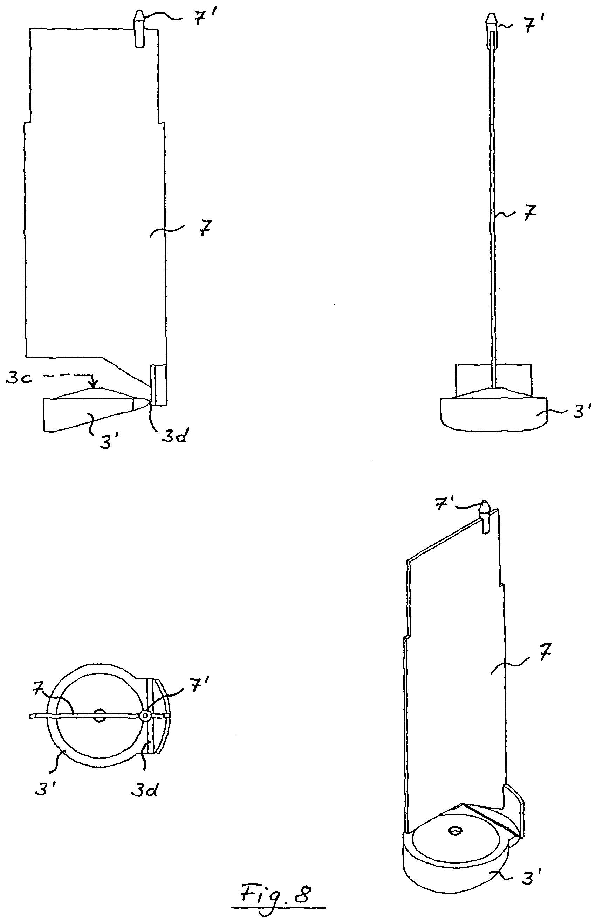

In Fig. 1 ist ein Schnitt durch einen nicht zur Erfindung gehörenden Dosierspender 1 mit zwei kartuschenförmigen Behältern 6a und 6b gezeigt, die zugeordnete Pumpeinheiten 2a, 2b besitzen (nur schematisch dargestellt, da an sich bekannt). Die Einstellung der Mischung erfolgt hier durch Verdrehen einer Einstelleinrichtung 3 um die Hochachse mittels einer zylindrischen Außenhülse 8. Beim Drücken einer Betätigungseinrichtung 4 werden die Pumpeinheiten 2a, 2b beaufschlagt und zwar je nach Abstand zu der Einstellvorrichtung 3, die hier als Keilring 3' ausgeführt ist, mit unterschiedlichem Förderhub oder -volumen. Wie in Fig. 8 näher dargestellt, ist der Keilring 3' bevorzugt mit einem Kraftübertragungselement 7 zu einem Bauteil verbunden, insbesondere als Spritzgussteil gestaltet. Der drehbare Keilring 3' der Einstelleinrichtung 3 ist mit einer Schwenkachse 3a und Lagerböcken 3b am Boden der Außenhülse 8 gelagert und weist auf der Unterseite zur Horizontalen einen Freiwinkel von etwa 25° auf.

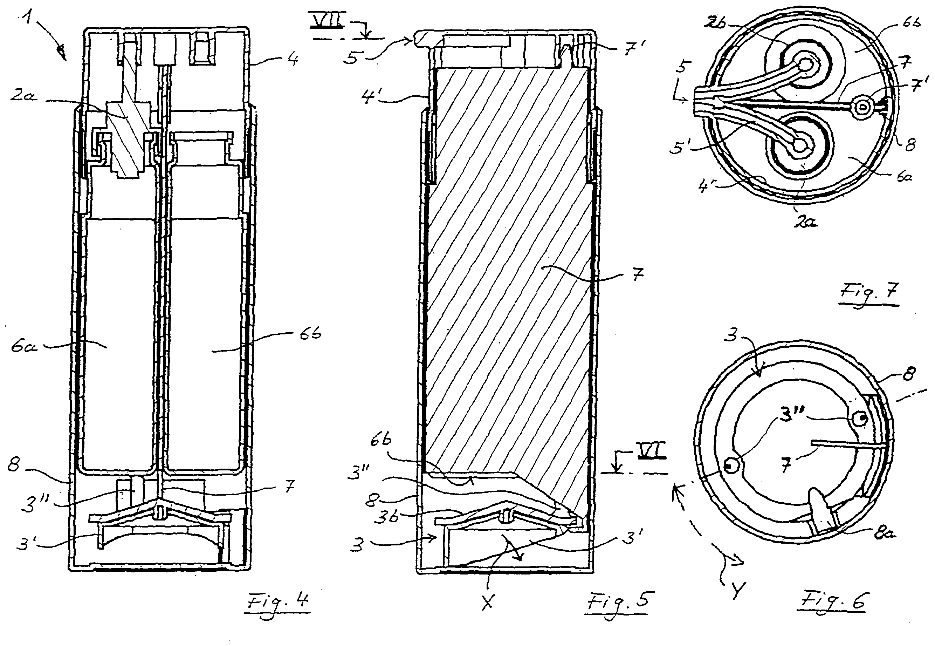

Wie in Fig. 2 dargestellt, wird beim manuellen Niederdrücken der Betätigungseinrichtung 4, hier in Form eines Druckknopfes 4' mit einem integrierten Spender 5 (vgl. Fig. 7, insbesondere in Düsenform) das Kraftübertragungselement 7 in Axialrichtung A nach unten gedrückt, so dass der Keilring 3' mit der hier rechten Seite nach unten kippt (vgl. auch Pfeil X in Fig. 5). Dabei wird auch der hier rechte Behälter 6b nach unten verschoben, oder anders ausgedrückt, es wird zugelassen, dass dieser nach unten ausweichen kann, während der linke Behälter 6a kaum oder nicht ausweichen kann. Somit wird am hier linken Behälter 6a mit einem größeren Förderhub gepumpt als am rechten Behälter 6b, z. B. 90% der Gesamtmenge aus dem Behälter 6a und 10% aus dem Behälter 6b. Wenn die Einstelleinrichtung 3 mit der Außenhülse 8 um ca. 90° um die Hochachse gedreht wird, sind die beiden Behälter 6a und 6b mit ihren Pumpeinheiten 2a und 2b in gleicher Höhenposition zu dem Keilring 3', so dass dann die Fördermenge der Pumpeinheiten 2a und 2b gleich groß, also das Mischungsverhältnis etwa 50:50, wäre.

Würde die Einstelleinrichtung 3 über die drehbare Hülse 8 um 180° gegenüber der in Fig. 1 und 2 gezeigten Position gedreht und die Betätigungseinrichtung 4 niedergedrückt, ergibt sich die umgekehrte Höhenpositionierung der Pumpeinheiten 2a und 2b, so dass der Förderhub der rechten Pumpeinheit 2b dann z. B. 90 % wäre, während die linke Pumpeinheit 2a noch ein Fördervolumen von ca. 10% an der gesamten Austragsmenge, bestehend aus den Komponenten in den beiden Behältern 6a und 6b beisteuert. Ab Werk wird meist eine Mittelposition voreingestellt, so dass beide Pumpeinheiten 2a, 2b einen identischen Hub oder ein Fördervolumen von 50% der Gesamtausgabemenge besitzen. Die Mischung enthält dann gleiche Teile der beiden Komponenten. Bei Zwischenpositionen der Einstelleinrichtung 3 zwischen den vorstehend genannten Stellungen ergeben sich entsprechende Zwischenverhältnisse zwischen den Hüben oder Fördervolumina der Pumpeinheiten 2a, 2b, (vgl. die in Fig. 2 dargestellten unterschiedlichen Eintauchtiefen der Pumpkolben), so dass diese für jede Komponente zwischen 0%:100% und 100%:0% veränderbar sind. Zur Einstellung des Mischungsverhältnisses wird in einfacher Weise die zylindrische Außenhülse 8 gegenüber dem Druckknopf 4' verdreht, wobei diese durch Riffelungen, Strukturierungen oder dgl. am Außenumfang besonders gut von der menschlichen Hand gegriffen werden kann. Die Betätigung des Druckknopfes 4' erfolgt dabei in Art einer Spraydose.

Fig. 3 zeigt einen Querschnitt durch den unteren Bereich des Dosierspenders 1 entlang der Schnittlinie III in Fig. 1. Hierbei ist noch der unterste Teil des hier rohrförmigen Kraftübertragungselements 7 ersichtlich, das die Ausweichbewegung des Keilrings 3' steuert. Der Keilring 3' ist hierbei im linken Bereich mit seiner Schwenkachse 3a an Lagerböcken 3b auf dem Boden der Außenhülse 8 gelagert. Das hier rohrförmig ausgebildete Kraftübertragungselement 7 kann auch in Form eines Stabes oder einer durchmesserkleineren Röhre bzw. eines Vierkantprofils von oben nach unten durch den Dosierspender 1 hindurch verlaufen. Wesentlich ist lediglich die kraftschlüssige Koppelung zwischen (oberer) Betätigungseinrichtung und (unterer) Einstelleinrichtung 3. So kann das Kraftübertragungselement 7 auch eine relativ flache Form aufweisen, wie dies nachfolgend in Form einer Zwischenwand dargestellt ist (vgl. insbesondere auch Fig. 8).

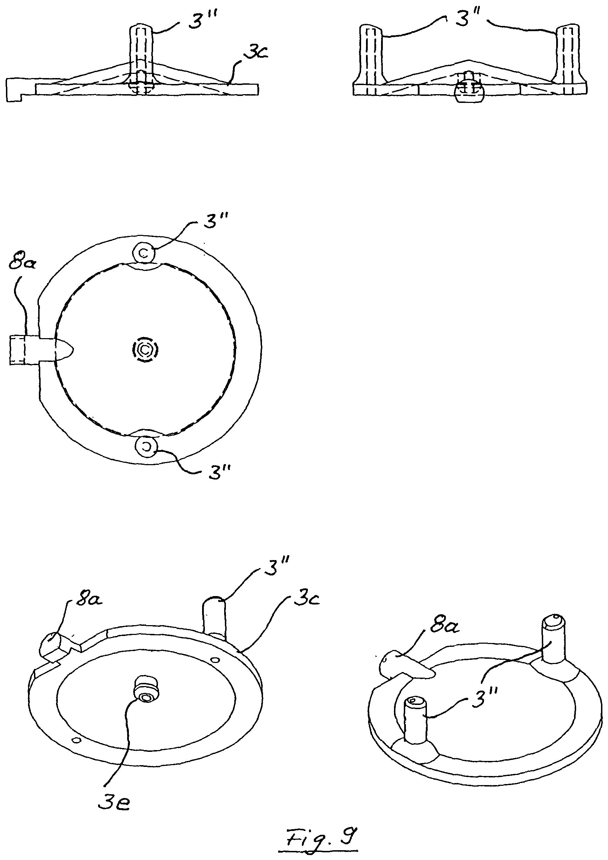

In Fig. 4 weist die Einstelleinrichtung 3 an der Unterseite der Behälter 6a, 6b am Keilring 3' noch eine Einstellscheibe 3c mit zwei dornartigen Vorsprüngen 3" auf (vgl. insbesondere Fig. 9), die durch Verdrehen der Außenhülse 8 und Betätigen des Druckknopfes 4' am jeweiligen Boden der Behälter 6a, 6b anliegen können. In Abhängigkeit von der Verdrehposition der Einstelleinrichtung 3 (vgl. Fig. 6) wird einer der dornartigen Vorsprünge 3" so positioniert, dass hier beispielsweise bei Niederdrücken der Betätigungseinrichtung 4 eine größere Fördermenge aus dem Behälter 6a erfolgt. In Übereinstimmung mit der vorher beschriebenen Ausführung sind in der Außenhülse 8 des Dosierspenders 1 wiederum zwei Pumpeinheiten 2a, 2b aufgenommen, die z.B. in Kolbenbauweise ausgeführt sind. Die einzelnen Kanäle der Pumpeinheiten 2a, 2b münden wiederum an der Spenderdüse 5. Die Zwischenwand als bevorzugte Form des Kraftübertragungselements 7 dient auch der sicheren Führung der Kartuschen bzw. Behälter 6a, 6b, die zudem bei Betätigung des Druckknopfes 4' axial verschiebbar innerhalb der Außenhülse 8 geführt sind. Wichtig ist hierbei, dass die Zwischenwand als Kraftübertragungselement 7 die Bewegung des Druckknopfes 4' auch nach unten zum hier schwenkbaren Keilelement 3' (vgl. Pfeil X) übertragen kann. Die Zwischenwand 7 muss dabei nicht durchgehend sein, sondern kann auch in Art eines Stabes oder Rohres nach unten zur Einstelleinrichtung 3 geführt sein.

In Fig. 5 ist keilförmige Gestaltung des Keilringes 3' gut erkennbar, der bevorzugt mit einem unteren Haken der Zwischenwand 7 gekoppelt ist, wobei diese Bauteile zur einfachen Bauweise auch als einstückiges Spritzgussteil gestaltet sein können (vgl. Fig. 8). Damit kann zudem eine größere Hebelwirkung erzielt werden, so dass die Betätigungskräfte an der Betätigungseinrichtung 4 gering bleiben können.

In Fig. 6 ist die Verdrehung der Einstelleinrichtung 3 mit den Vorsprüngen 3" gezeigt, wobei auch noch der unterste Bereich der Zwischenwand 7 erkennbar ist. Die beiden Vorsprünge 3" sind auf der verdrehbaren Einstellscheibe 3c (vgl. Fig. 9) angeordnet, die über einen Bolzen 8a mit der drehbaren Außenhülse 8 gekoppelt ist. Je nach Verdrehposition können sich die Vorsprünge 3" in Vertikalrichtung unterschiedlich weit bewegen, um so das Mischungsverhältnis aus den Behältern 6a und 6b zu variieren. Nur in der Mittelstellung ist der Bewegungsspielraum gleich, so dass sich ein ausgewogenes Mischungsverhältnis (50:50) ergibt, da dann (im Gegensatz zu der hier in Fig. 6 gezeigten Stellung) beide Vorsprünge 3b nach Verdrehung von hier etwa 70° (Pfeil Y) entgegen dem Uhrzeigersinn etwa den gleichen Abstand zur Zwischenwand 7 hätten. Das Mischungsverhältnis lässt sich somit durch einfaches Verdrehen der Außenhülse 8 einstellen.

Fig. 7 zeigt einen Horizontalschnitt durch den obersten Bereich des Druckknopfes 4' mit dem Spenderelement 5. Diese ist hier zweigeteilt, wobei die jeweilige Komponente aus dem Behälter 6a und 6b bis zum Auslass aus der Spenderdüse 5 getrennt in Kanälen 5' geführt werden. Die Spenderdüse 5 kann aber auch eine Mischkammer, insbesondere einen Statikmischer zum Vermischen der Komponenten vor dem Austritt aufweisen. In dieser Draufsicht ist auch ersichtlich, dass die Zwischenwand als bevorzugte Form eines Kraftübertragungselements 7 mit einem oberen Zapfen 7' in den Druckknopf 4' eingreift, so dass sich eine Rotationssicherung ergibt.

In Fig. 8 ist diese Zwischenwand mit dem Zapfen 7' in mehreren Ansichten gezeigt, wobei hier der Keilring 3' über ein Filmscharnier 3d angekoppelt ist. Hierdurch kann diese Baugruppe als ein Spritzgussteil hergestellt und im Dosierspender 1 schnell und einfach montiert werden. Das Filmscharnier 3d ersetzt hierbei auch die Bauteile 3a und 3b aus Fig. 1 bis 3 und ist somit besonders montagefreundlich. Für die Verstellung des Dosierverhältnisses kann zudem die vorstehend erwähnte Einstellscheibe 3c einfach auf dem Keilring 3' eingeklipst werden, wie dies links oben in Fig. 8 mit einer Strichlinie angedeutet ist. Aus der Perspektivansicht in Fig. 8 ist weiterhin die schlanke und damit platzsparende Gestaltung des Kraftübertragungselements 7 gut ersichtlich.

In Fig. 9 ist die Einstellscheibe mit den beiden Vorsprüngen 3" zur Beaufschlagung des Bodens der Behälter 6a, 6b in mehreren Ansichten dargestellt. Hierbei ist auch der radiale Bolzen 8a zur Koppelung mit der verdrehbaren Außenhülse 8 deutlich erkennbar (vgl. auch Fig. 6), ebenso ein Drehzapfen 3e zum Einklipsen im Zentrum des Keilrings 3'. Somit kann die Einstelleinrichtung 3 und angrenzende Bauteile rasch zum Dosierspender 1 zusammen montiert werden.

### Bezugszeichenliste:

1 = Dosierspender
2a, b = Pumpeinheit
3 = Einstelleinrichtung
3' = Keilring
3" = Vorsprünge
3a = Schwenkachse
3b = Lagerböcke
3c = Einstellscheibe
3d = Filmscharnier
3e = Drehzapfen
4 = Betätigungseinrichtung
4' = Druckknopf
5 = Spenderelement
5' = Kanäle
6a, 6b = Behälter
7 = Kraftübertragungselement
7' = Zapfen
8 = Hülse
8a = (radialer) Bolzen

## Patentansprüche

1. Dosierspender (1) für die Abgabe einer aus mehreren Komponenten bestehenden Substanz, umfassend:
wenigstens zwei Behälter (6a, 6b) in einer Außenhülse (8) für die Aufnahme der Komponenten der Substanz;
eine Pumpeinheit (2a, 2b) an jedem der Behälter (6a, 6b);
eine Einstelleinrichtung (3), mit der das Mengenverhältnis der Komponenten zueinander einstellbar ist;
eine bewegliche Betätigungseinrichtung (4) für die Pumpeinheiten (2a, 2b) und/oder Behälter (6a, 6b); und
ein Spenderelement (5) für die von dem Dosierspender (1) abzugebende Substanz; und
ein Kraftübertragungselement (7) vorgesehen ist, das bei beaufschlagter Betätigungseinrichtung (4) relativ zur Außenhülse (8) und in Axialrichtung (A) des Dosierspenders (1) verschiebbar ist,
**dadurch gekennzeichnet, dass**
die Betätigungseinrichtung (4) von den Behältern (6a, 6b) gesondert ausgeführt und das Kraftübertragungselement (7) zwischen den Behältern (6a, 6b) relativ zu diesen verschiebbar angeordnet ist.

2. Dosierspender (1) nach Anspruch 1, **dadurch gekennzeichnet, dass**
die Außenhülse (8) zugleich den Außenumfang des Dosierspenders (1) bildet und insbesondere am Außenumfang Riffelungen oder Strukturierungen aufweist.

3. Dosierspender (1) nach Anspruch 1 oder 2, **dadurch gekennzeichnet, dass**
am Boden der Außenhülse (8) die Einstelleinrichtung (3) gelagert ist, insbesondere mit einer Schwenkachse (3a), die an Lagerböcken (3b) eingreift.

4. Dosierspender (1) nach einem der vorhergehenden Ansprüche,
**dadurch gekennzeichnet, dass**
die Betätigungseinrichtung (4) als Druckknopf (4') ausgebildet ist.

5. Dosierspender (1) nach einem der Ansprüche 1 bis 4, **dadurch gekennzeichnet, dass**
das Kraftübertragungselement (7) und die Einstelleinrichtung (3) einstückig ausgebildet sind, insbesondere als Kunststoff-Spritzgussteil.

6. Dosierspender (1) nach einem der Ansprüche 1 bis 5, **dadurch gekennzeichnet, dass**
die Einstelleinrichtung (3) als Keilring (3') ausgebildet ist und/oder Vorsprünge (3") aufweist,
die in Axialrichtung (A) des Dosierspenders (1) ausgerichtet sind.

7. Dosierspender (1) nach einem der Ansprüche 1 bis 6, **dadurch gekennzeichnet, dass**
die Pumpeinheiten (2a, 2b) mit dem Spenderelement (5) über Kanäle (5') verbunden sind,
die bevorzugt im Druckknopf (4') eingeformt sind.

8. Dosierspender (1) nach einem der vorhergehenden Ansprüche,
**dadurch gekennzeichnet, dass**
das Kraftübertragungselement (7) als Zwischenwand ausgebildet ist.

9. Dosierspender (1) nach einem der vorhergehenden Ansprüche, **dadurch gekennzeichnet, dass**
am Kraftübertragungselement (7) ein Zapfen (7') angeordnet ist, der mit der Betätigungseinrichtung (4) verbunden ist.

10. Dosierspender (1) nach einem der vorhergehenden Ansprüche,
**dadurch gekennzeichnet, dass**
eine Einstellscheibe (3c) der Einstelleinrichtung (3) mit Vorsprüngen (3") und die Hülse (8) in Verdrehrichtung mittels eines Bolzens (8a) gekoppelt sind, der insbesondere radial ausgerichtet ist.

## Claims

1. A dispenser (1) for ejecting a substance consisting of several components, comprising:
at least two containers (6a, 6b) in an outer sleeve (8) for receiving the components of the substance;
a pump unit (2a, 2b) at each of the containers (6a, 6b);
an adjusting device (3) with which the quantity ratio of the components to each other can be adjusted;
a movable actuation device (4) for the pump units (2a, 2b) and/or containers (6a, 6b); and
a dispenser element (5) for the substance to be ejected by the dispenser (1); and a force transmission element (7) which is movable relative to the outer sleeve (8) and in an axial direction (A) of the dispenser (1) when the actuation device (4) is impinged,
**characterized in that**
the actuation device (4) is realized separately from the containers (6a, 6b) and that the force transmission element (7) is arranged movably between the containers (6a, 6b) relative to them.

2. The dispenser (1) according to claim 1, **characterized in that**
the outer sleeve (8) form the outer circumference of the dispenser (1) at the same time and has flutings or structures particularly at the outer circumference.

3. The dispenser (1) according to claim 1 or 2, **characterized in that**
the adjusting device (3) is stored at the bottom of the outer sleeve (8), particularly with a pivot axis (3a) which engages at bearing blocks (3b).

4. The dispenser (1) according to one of the preceding claims,
**characterized in that**
the actuation device (4) is configured as a push button (4').

5. The dispenser (1) according to one of the claims 1 to 4, **characterized in that** the force transmission element (7) and the adjusting device (3) are configured integrally, particularly as a plastic molded part.

6. The dispenser (1) according to one of the claims 1 to 5, **characterized in that**
the adjusting device (3) is configured as a tapered ring (3') and/or has projections (3") which are aligned in an axial direction (A) of the dispenser (1).

7. The dispenser (1) according to one of the claims 1 to 6, **characterized in that** the pump units (2a, 2b) are connected with the dispenser element (5) through channels (5') which are preferably formed in the push button (4').

8. The dispenser (1) according to one of the preceding claims,
**characterized in that**
the force transmission element (7) is configured as an interim wall.

9. The dispenser (1) according to one of the preceding claims, **characterized in that**
a cone (7') is arranged at the force transmission element (7), the cone being connected with the actuation device (4).

10. The dispenser (1) according to one of the preceding claims,
**characterized in that**
an adjustment disc (3c) of the adjusting device (3) is coupled with projections (3") and the sleeve (8) is coupled in rotation direction by means of a bolt (8a), which is aligned particularly radially.

## Revendications

1. Distributeur de dosage (1) destiné à distribuer une substance se composant de plusieurs composants, comprenant:
au moins deux récipients (6a, 6b) à l'intérieur d'un manchon extérieur (8) destinés à recevoir les composants de la substance;
une unité de pompe (2a, 2b) sur chacun des récipients (6a, 6b);
un dispositif de réglage (3) par le biais duquel on peut régler le rapport de quantité des composants les uns par rapport aux autres;
un dispositif d'actionnement (4) mobile pour les unités de pompe (2a, 2b) et/ou les récipients (6a, 6b); et
un élément de distribution (5) pour la substance à distribuer par le distributeur de dosage (1), et
un élément de transmission de force (7) est prévu qui, lorsque ledit dispositif d'actionnement (4) est sollicité, peut être déplacé par rapport au manchon extérieur (8) et dans la direction axiale (A) du distributeur de dosage (1),
**caractérisé par le fait que** ledit dispositif d'actionnement (4) est réalisé de manière séparée des récipients (6a, 6b), et ledit élément de transmission de force (7) est disposé entre les récipients (6a, 6b) de manière à être déplaçable par rapport à ceux-ci.

2. Distributeur de dosage (1) selon la revendication 1, **caractérisé par le fait que**, en même temps, le manchon extérieur (8) forme la circonférence extérieure du distributeur de dosage (1) et, en particulier, présente des cannelures ou des structurations sur la circonférence extérieure.

3. Distributeur de dosage (1) selon la revendication 1 ou 2, **caractérisé par le fait que** le dispositif de réglage (3) est logé au fond du manchon extérieur (8), en particulier au moyen d'un axe de pivotement (3a) qui s'engage sur des supports (3b).

4. Distributeur de dosage (1) selon l'une quelconque des revendications précédentes, **caractérisé par le fait que** le dispositif d'actionnement (4) est réalisé en tant que bouton-poussoir (4').

5. Distributeur de dosage (1) selon l'une quelconque des revendications 1 à 4, **caractérisé par le fait que** ledit élément de transmission de force (7) et ledit dispositif de réglage (3) sont réalisés d'un seul tenant, en particulier en tant que pièce moulée par injection en matière plastique.

6. Distributeur de dosage (1) selon l'une quelconque des revendications 1 à 5, **caractérisé par le fait que** ledit dispositif de réglage (3) est réalisé en tant que bague de calage (3') et/ou présente des projections (3") qui sont orientées dans la direction axiale (A) du distributeur de dosage (1).

7. Distributeur de dosage (1) selon l'une quelconque des revendications 1 à 6, **caractérisé par le fait que** les unités de pompe (2a, 2b) sont reliées à l'élément de distribution (5) via des canaux (5') qui, de préférence, sont formés dans le bouton-poussoir (4).

8. Distributeur de dosage (1) selon l'une quelconque des revendications précédentes, **caractérisé par le fait que** ledit élément de transmission de force (7) est réalisé en tant que cloison.

9. Distributeur de dosage (1) selon l'une quelconque des revendications précédentes, **caractérisé par le fait que** sur ledit élément de transmission de force (7) est disposé un tenon (7') qui est relié au dispositif d'actionnement (4).

10. Distributeur de dosage (1) selon l'une quelconque des revendications précédentes, **caractérisé par le fait qu'**un disque de réglage (3c) du dispositif de réglage (3) ayant des projections (3") et ledit manchon (8) sont accouplés, dans le sens de rotation, au moyen d'un boulon (8a) qui est orienté en particulier radialement.
